Europäisches Patentamt

European Patent Office

Office européen des brevets

(19)

(11) Numéro de publication: **0 285 643**
**B1**

(12) **FASCICULE DE BREVET EUROPEEN**

(45) Date de publication du fascicule du brevet: **18.07.90**

(21) Numéro de dépôt: **87906750.2**

(22) Date de dépôt: **14.10.87**

(86) Numéro de dépôt international:
**PCT/FR87/00399**

(87) Numéro de publication internationale:
**WO 88/02712 21.04.88 Gazette 88/09**

(51) Int. Cl.⁵: **B 61 F 5/38**, B 61 B 13/12,
B 60 L 13/02

(54) **ESSIEU A GUIDAGE MAGNETIQUE POUR VEHICULE SUR VOIE FERREE.**

(30) Priorité: **14.10.86 FR 8614255**

(43) Date de publication de la demande:
**12.10.88 Bulletin 88/41**

(45) Mention de la délivrance du brevet:
**18.07.90 Bulletin 90/29**

(84) Etats contractants désignés:
**AT BE CH DE GB IT LI LU NL SE**

(56) Documents cités:
**CH-A- 162 020**
**FR-A-2 117 660**

(73) Titulaire: **MATRA TRANSPORT**
**2, rue Auguste-Comte**
**F-92170 Vanves (FR)**
(73) Titulaire: **INSTITUT NATIONAL DE RECHERCHE**
**SUR LES TRANSPORTS ET LEUR SECURITE**
**2, avenue du Général Malleret-Joinville**
**F-94110 Arcueil (FR)**

(72) Inventeur: **MAUPU, Jean-Louis**
**152, rue de Chevilly**
**F-94800 Villejuif (FR)**

(74) Mandataire: **Fort, Jacques**
**CABINET PLASSERAUD 84, rue d'Amsterdam**
**F-75009 Paris (FR)**

Courier Press, Leamington Spa, England.

## Description

L'invention concerne les véhicules ferroviaires munis d'essieux à roues métalliques de sustentation et elle trouve un application particulièrement importante dans la réalisation d'installations de transport à grande vitesse dont la voie comporte des tronçons urbains susceptibles de comporter des courbes de faible rayon.

Les essieux ferroviaires traditionnels sont autoguidés du fait que les deux roues sont solidaires en rotation et présentent des tables de roulement coniques de sorte que tout décentrage de l'essieu fait varier en sens opposés les rayons des cercles de roulement des deux côtés de l'essieu. L'essieu tend alors à s'orienter dans un sens qui le recentre par rapport à la voie. Pour éviter les instabilités, on réunit deux essieux dans un bogie par l'intermédiaire de moyens élastiques de rappel des boîtes d'essieux, l'optimisation étant assurée par un choix approprié de la raideur des moyens de rappel, de l'empattement, de la conicité de la table et des masses non suspendues.

Mais la recherche de la stabilité à grande vitesse conduit à choisir, pour la raideur des moyens élastiques de rappel, l'empattement du bogie et la conicité des tables, des valeurs qui réduisent la possibilité de passer sans glissement sur des tronçons de voie à forte courbure. Pratiquement, pour les valeurs actuellement choisies, on ne peut descendrer au-dessous d'un rayon d'environ 700 m sans risque que les roues ne viennent en contact par leur boudin. A l'heure actuelle, on est contraint, pour permettre le franchissement des courbes inévitables en milieu urbain, avec du matériel à grande vitesse, de graisser les rails.

Diverses solutions ont été proposées pour rendre compatibles la stabilité à grande vitesse et le franchissement des courbes serrées. Une solution, mise en oeuvre sur les rames espagnoles "TALGO", consiste à utiliser un essieu à roues indépendantes orienté par un brancard attelé à la voiture précédente de la rame. Le dispositif rend les rames irréversibles, ne fonctionne pas sur la voiture de tête et n'assure pas un guidage rigoureux dans les entrées et sorties de courbes. Il s'agit là de limitations gênantes.

L'invention vise à fournir un essieu pour véhicule sur voie ferrée répondant mieux que ceux antérieurement connus aux exigences de la pratique, notamment en ce qu'il permet tout à la fois d'assurer la stabilité à grande vitesse et de tolérer des courbes de faible rayon.

Dans ce but, l'invention propose un essieu orientable à roues indépendantes métalliques pour véhicule ferroviaire comportant un timon perpendiculaire à l'axe des roues, caractérisé en ce qu'il comprend également des moyens capteurs de mesure de la position du timon par rapport à la voie, des moyens de détermination de position de consigne par rapport à la voie, des moyens électromagnétiques portés par le timon et coopérant avec la voie pour exercer sur l'essieu une force d'orientation de ce dernier, et un circuit d'asservissement fournissant aux moyens électromagnétiques un courant tel que ces moyens tendent à annuler l'écart entre position mesurée et position de consigne.

Dans un mode avantageux de réalisation de l'invention, l'essieu comprend un capteur de mesure de l'écart suivant l'axe des roues et un capteur de mesure de l'écart à au moins une extrémité du timon. A condition d'utiliser des moyens de mémorisation, il est possible de déduire, des éléments fournis par deux capteurs seulement, la position aux deux extrémitées du timon. Une solution qui rend l'essieu susceptible de fonctionner de la même façon quelle que soit la direction de déplacement sur la voie, consiste à prévoir un capteur à chaque extrémité du timon.

Les capteurs peuvent notamment être prévus pour mesurer l'entrefer par rapport à un élément ferromagnétique appartenant à la voie.

Si on désigne alors par $e_{ar}$, $e_m$, $e_{av}$ les entrefers à l'arrière, au milieu et à l'avant du timon par rapport à une position de centrage, on cherchera, sur voie rectiligne, à donner à ces trois entrefers une valeur de consigne $e_o$ et, sur une voie courbe, à leur donner des valeurs:

$$e_m = e_o$$

$$e_{av} = e_{ar}$$

Grâce à l'emploi de moyens électromagnétiques commandant l'orientation du timon, ces moyens n'ont à fournir qu'un moment de rotation et peuvent en conséquence n'avoir qu'une puissance réduite. Avantageusement, les moyens comportent deux organes placés symétriquement par rapport à l'axe de rotatioon des roues, alimentés de façon à exercer des forces de sens opposés. Les moyens électromagnétiques créent ainsi un angle de dérive qui se traduit, lorsque l'essieu est en roulement, par une force de rappel calculable par les formules de Kalker. Les organes électromagnétiques placés aux extrémités du timon sont avantageusement complétés par un organe électromagnétiques supplémentaire placé au niveau de l'axe de l'essieu, susceptible d'exercer une force transversale importante, associé à un circuit qui le fait intervenir uniquement dans le cas d'inaptitude transitoire, de courte durée, des essieux à revenir vers la trajectoire correcte sous l'action d'un angle de dérive, par exemple dans le cas d'une perte d'adhérence.

Pour réduire les conséquences d'une anomalie ou d'une panne des circuits d'asservissement, des butées mécaniques seront prévues, par exemple à proximité des extrémités du timon.

Un montage symétrique par rapport à l'axe des roues et une commande également symétrique des moyens électromagnétiques offrent l'avantage de rendre le système totalement réversible. Mais on peut cependant utiliser un montage dissymétrique, en prévoyant des moyens d'inversion suivant le sens de marche.

L'ensemble comprenant la partie active d'un moteur linéaire de traction, les moyens électromagnétiques, et les capteurs peuvent être intégrés dans une poutre formant timon et prévue pour circuler dans un rail à section droite en forme de U constituant induit pour le moteur linéaire et élément de guidage. Ce rail, appartenant à la voie, peut être suité à un niveau supérieur à celui du chemin de roulement matérialisé par les rails de sustentation. La poutre est reliée à l'essieu par des moyens de suspension. On découple les masses suspendues, si on donne une faible raideur transversale de la suspension entre caisse et essieu. La suspension entre l'essieu et la poutre doit être raide dans les sens transversal et longitudinal pour que la liaison entre la poutre et l'essieu soit pratiquement rigide en rotation.

L'invention sera mieux comprise à la lecture de la description qui suit de modes particuliers de réalisation données à titre d'exemple non limitatifs. La description se réfère aux dessins qui l'accompagnent, dans lesquels.

la figure 1 est un schéma, où les écarts sont représentés avec une amplitude très exagérée, montrant les paramètres qui interviennent dans le guidage d'un essieu,

la figure 2 est un schéma de principe montrant une constitution possible d'un circuit de régulation,

les figures 3 et 3A sont des schémas, respectivement en perspective et en vue de dessus, montrant une disposition possible des moyens de guidage d'un essieu,

les figures 4, 5 et 6 montrent, respectivement en vue de face, en vue de côté (en coupe partielle) et en vue de dessus un mode de réalisation des moyens schématisés en figure 3, mais avec timon en U.

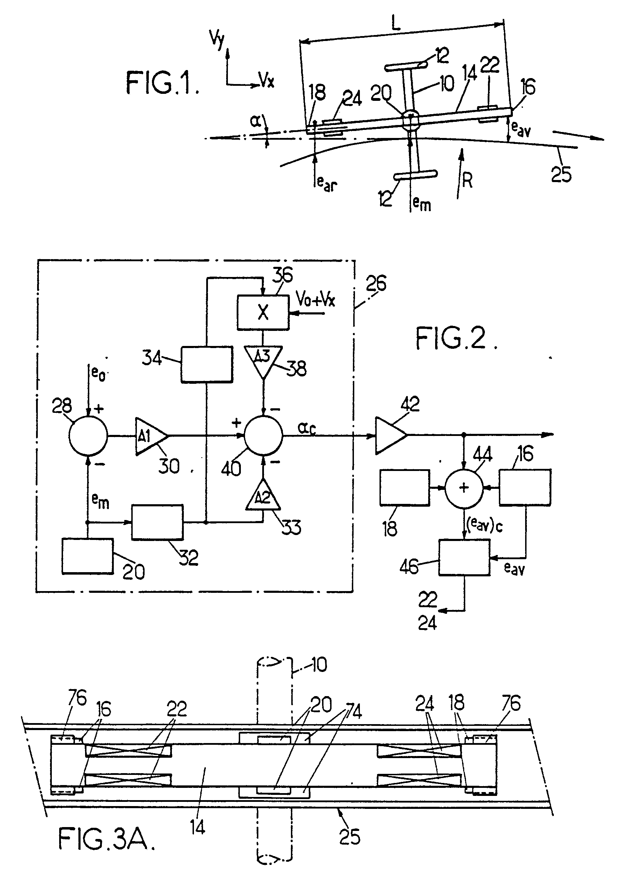

La figure 1 montre un essieu comportant un axe d'essieu 10 sur lequel tournent deux roues indépendantes 12 roulant sur des rails non représentées. L'axe 10 est solidaire d'un timon 14 dont la position par rapport à la voie est mesurable par:

deux capteurs d'extrémité 16 et 18, placés respectivement à l'avant et à l'arrière du timon 14, et un capteur médian 20, placé au droit de l'axe 10 de l'essieu.

Si on désigne par:

L la distance entre les capteurs 16 et 18 (qu'on supposera symétrique par rapport à l'axe des roues)

R le rayon de courbure de la voie (supérieur à L de plusieurs ordres de grandeur)

$\alpha$ l'angle de dérive

f la flèche de la voie sur la longueur L.

F la force de rappel s'exerçant sur l'essieu.

$e_{av}$, $e_{ar}$ et $e_m$ les entrefers mesurés respectivement par les capteurs 16, 18 et 20.

la flèche f et l'angle de dérive $\alpha$ sont directement calculables à partir des valuers d'entrefer fournies par les capteurs. La valeur de R peut à son tour être déduite des entrefers par la formule:

$$1/R = 8 \, f \, / \, L^2$$

$$= (4 \, e_{av} + 4 \, e_{ar} - 8 \, e_m) \, / \, L^2$$

La force de rappel transversale F peut de son côté être déterminée à partir de l'angle de dérive $\alpha$ et de la vitesse réduite de dérive (rapport entre la vitesse transversale Vy et la vitesse longitudinale Vx):

$$F = K \, (\alpha - Vy \, / \, Vx)$$

Dans cette formule, K désigne une constante et Vy correspond à la vitesse de variation de l'entrefer $e_m$, qu'on peut désigner par $\dot{e}_m$.

Si l'essieu est soumis à une force perturbatrice P, telle que la force centrifuge, l'équation dynamique de l'essieu est:

$$\ddot{e}_m \, M = K \, (\alpha - \ddot{e}_m \, / \, Vx) + P$$

Cette formule, où M désigne la masse associée à l'essieu, montre que l'on peut annuler $\ddot{e}_m$ à chaque instant en agissant sur la paramètre de commande $\alpha$.

Pour agir sur $\alpha$, c'est-à-dire pour orienter l'essieu par rapport à la voie, le timon est muni de moyens électromagnétiques constitués, dans le mode de réalisation montré en figure 1, par deux organes 22 et 24 placés chacun à une extrémité du timon, à proximité du capteur correspondant. Grâce à leur montage symétrique, les organes 22 et 24 n'ont à exercer qu'un moment de rotation sur le timon. Chacun des organes peut être constitué par un couple d'électro-aimants coopérant avec un rail matérialisant la ligne médiane 25 de la voie.

Le calcul montre que l'angle de consigne $\alpha_c$ est donné par la formule:

$$\alpha_c = A_1 \, (e_o - e_m) - A_2 \dot{e}_m - A_3 \, (V_x + V_o) \, \ddot{e}_m \qquad (1)$$

où $A_1$, $A_2$ et $A_3$ sont des constantes.

La valeur de $\alpha_c$ peut en conséquence, à une constante multiplicative près, être obtenue par le circuit 26 de la figure 2. Ce circuit comprend un soustracteur 28 qui reçoit d'une part la valeur de consigne de l'entrefer $e_o$ et d'autre part la valeur $e_m$ fournie par le capteur 20. Un amplificateur 30 de gain $A_1$ fournit, à partir de la sortie du soustracteur, le premier terme de l'équation (1) ci-dessus, qui représente la force de rappel tendant à ramener l'essieu dans une position centrée. Deux dérivateurs en cascade 32 et 34 permettent d'obtenir la vitesse et l'accéleration de dérive. A partir de $\dot{e}_m$, un amplificateur (33) de gain $A_2$ fournit le second termine de l'équation (1), qui représente l'amortissement principal. Enfin, un multiplieur 36 (qui reçoit un signal de vitesse fourni par un capteur placé sur le véhicule) et un amplificateur 38 de gain $A_3$ fournisssent le troisième terme de l'équation (1), qui représente un amortissement du second ordre.

Les sorties des amplificateurs 32, 33 et 34 sont appliquées à un soustracteur 40 qui fournit un

signal proportionnel à $\alpha_c$.

A partir de $\alpha_c$ et des valeurs réelles des entrefers $e_{av}$ et $e_{ar}$ il est possible d'élaborer les grandeurs de consigne des entrefers de consigne $(e_{av})_c$ et $(e_{ar})_c$ par les formules:

$$(e_{av})_c = \tfrac{1}{2}(e_{av} + e_{ar} + \alpha_c L)$$

et $\qquad\qquad\qquad\qquad\qquad\qquad (2)$

$$(e_{ar})_c = \tfrac{1}{2}(e_{av} + e_{ar} - \alpha_c L)$$

La figure 2 montre, à titre d'exemple, un circuit d'élaboration de $(e_{av})_c$ comportant un amplificateur 42, de gain proportionnel à L, et un additionneur 44.

A partir des valeurs de $(e_{ar})_c$, $e_{av}$, et $e_{ar}$, un circuit de régulation 46 de constitution classique élabore le courant d'alimentatioon de l'organe 22. Une seconde branche, similaire à la première, alimente l'organe 24.

Un circuit supplémentaire peut être prévu pour alimenter un organe électromagétique central de rappel lorsque l'écart $e_m$ dépasse un seuil déterminé, afin d'exercer une force transversale de rappel tendant à ramener l'essieu dans une position centrée.

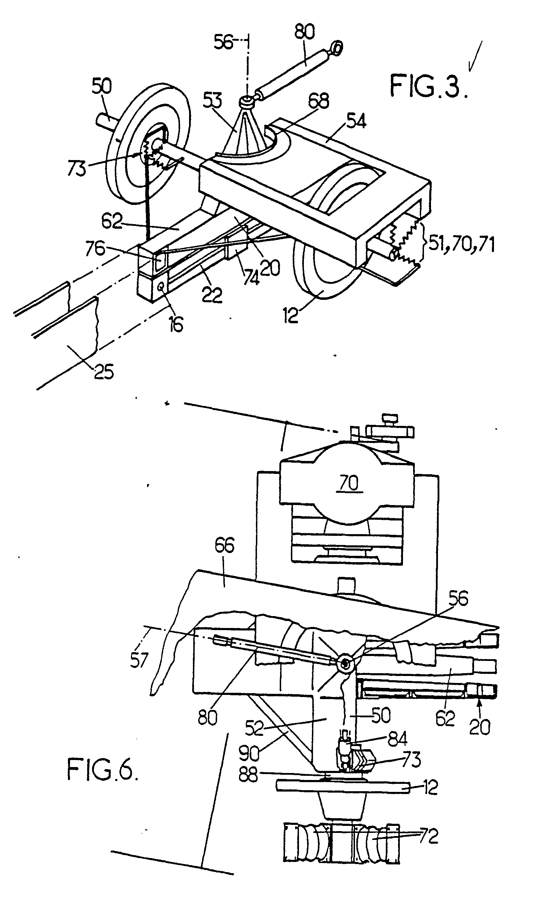

Les figures 3 et 3A montrent schématiquement une constitution possible du timon, utilisable lorsque le rail 25 a une section droite en forme de U et constitue l'induit fixe d'un moteur linéaire de propulsion et de ralentissement dont l'inducteur est monté dans une poutre en matériau amagnétique formant le timon. Le timon 20 porte de butées terminales 76 et centrales 74. Les butées centrales 74, très proches du rail lors du fonctionnement normal, sont en saillie par rapport au reste du timon aqueul elles laissent la possibilité de prendre un angle de dérive faible, mais agissant dans le sens du recentrage. Les butées terminales 76 protègent le moteur des chocs contre le rail d'induit 25. Ces butées 76 peuvent être constituées par des patins de frein d'immobilisation en station, voire même de freinage d'urgence. Dans ce dernier cas le circuit de la figure 2 doit être complété par des moyens permettant, en cas de besoin, de mettre l'essieu "en crabe" à l'aide des électro-aimants 22 et 24. Les capteurs d'extrémité 16 et 18 peuvent être au dessous des butées terminales 76 et les capteurs médians 20 au dessus des butées centrales 74. Tous ces capteurs sont avantageusement du type sans contact.

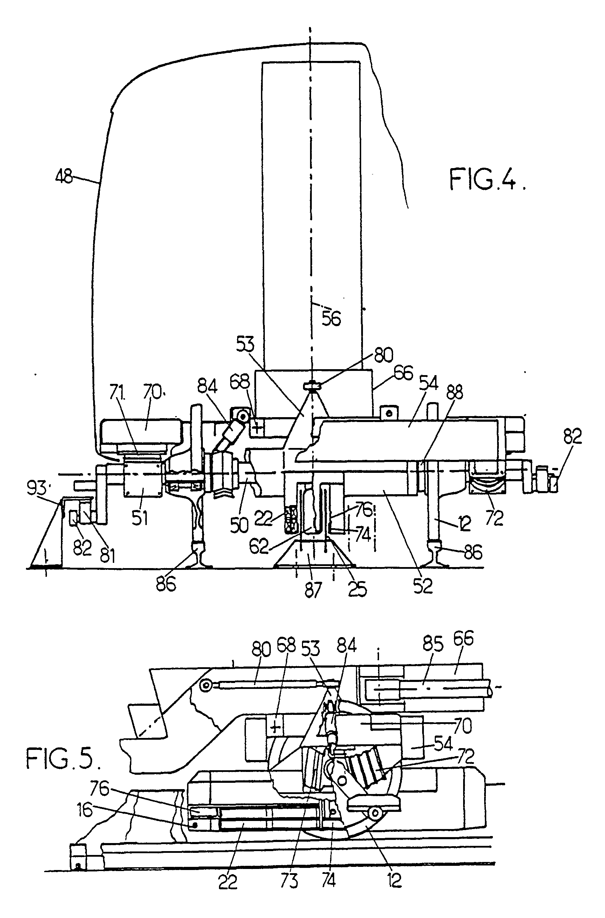

Sur les figures 4 à 6, où les organes correspondant à ceux de la figure 3 sont désignés par les mêmes numéros de référence, on voit que la caisse 48 comporte un longeron unique 66 contenant une barre d'attelage 85 articulée autour d'un axe vertical et le noeud de choc. Le longeron 66 repose sur une traverse de charge 54 par l'intermédiaire d'une couronne à billes 68 d'axe vertical. La traverse de charge 54 repose à son tour sur une traverse d'essieu 50 par l'intermédiaire d'une suspension double.

Dans le mode de réalisation illustré, cette suspension comporte deux paires de plots flexibles en élastomère 72 et des coussins pneumatiques 70. Ces derniers ne sont pas indispensables et pourront fréquemment être omis. Les plots en élastomère 72 reposent sur une boîte 51 (figure 4) équipée d'une suspension primaire de raideur élevée, destinée à intervenir en cas de venue en butée du coussin d'air correspondant 70.

Les plots en élastomère 72 reprennent, grâce à leur grande rigidité longitudinale, les efforts de freinage et de traction. Ayant une rigidité faible dans le sens tranversal, ils complètent l'action des coussins pneumatiques 70. La figure 4 fait apparaître qu'il est possible de placer les coussins 70 au même niveau que le plancher de la caisse 48 et les plots 72 au même niveau que l'axe d'essieu.

Deux amortisseurs 84, disposés en V (pour avoir une grande raideur d'attache) entre la couronne à billes 68 (ou la traverse de charge, en un point situé à proximité immédiate de la couronne à billes) et la traverse d'essieu 50, à proximité immédiate des roues 12, freinent les mouvements transversaux de la caisse.

Les roues 12 sont montées de façon indépendante par des boîtes de roulements à rouleaux coniques sur la traverse tubulaire d'essieu 50, correspondant à l'axe d'essieu 10 des figures 1 et 3. Les roues 12 peuvent avoir une table de roulement bombée et s'appuyer sur des rails plats 86 (figure 4) puisque le guidage n'est plus assuré par la coincité des tables. Etant donné que les roues doivent traverser le rail d'induit 25 dans certains types d'aiguillages, ce rail doit y comporter des lacunes. Pour réduire la longueur des lacunes et réduire la masse des roues et l'intertie de l'essieu, les roues 12 ont avantageusement une épaisseur plus faible que les roues classiques de véhicules sur voie ferrée.

Dans le mode de réalisation montré en figures 4 à 6, le timon encadre le rail d'induit 25 au lieu de se trouver à l'intérieur. Il a en conséquence une section en forme de U renversé portant les électro-aimants 22 et 24, les capteurs 16 et 18 (ainsi éventuellement que le capteur central 20), les butées 74 et 76 et la partie active du moteur linéaire. Ce moteur 62 peut être porté principalement aux extrémités du timon. Le timon est encastré dans une poutre transversale creuse 52 (figures 4 et 6).

La poutre creuse 52 repose sur la traverse d'essieu par l'intermédiaire d'une suspension de moteur qui doit être rigide transversalement et longitudinalement. Cette suspension comporte deux pairs de chevrons en élastomère 73 proches des roues 12. La suspension du moteur est ainsi indépendante de celle de la caisse, ce qui limite son débattement, et le roulis du timon. La suspension due moteur agit essentiellement dans le sens vertical. Elle lie rigidement en rotation le timon 20, les électro-aimants 22 et 24 et l'essieu et transmet les efforts de traction et de freinage à la traverse d'essieu 50. Dans le mode de réalisation illustré, la traverse d'essieu 50 est à un niveau plus élevé que le centre d'action du moteur 62 Une bielle 80 placée dans le longeron 66 est prévue pour encaisser l'effort de basculement.

L'une des extrémités de la bielle 80 est articulée, un droit de l'axe vertical de rotation 56 de l'essieu, sur un mât 53 encastré sur la poutre creuse 52 et le timon 20. L'autre extrémité de la bielle 80 est articulée dans l'axe 57 de la caisse (figure 6) au longeron 66.

Les électro-aimants 22 et 24 sont en regard des faces externes du rail constituant induit et organe de guidage. Ces électro-aimants 22 et 24 comportant une carcasse fixée de façon rigide en bas de la poutre formant le timon 209, en matériau amagnétique. Cette poutre peut notamment être en acier inoxydable et fabriquée par mécanosoudage. Les électro-aimants 22 et 24 sont placés symétriquement par rapport à la butée centrale 74. Les faces des carcasses sont avantageusement légèrement en biseau pour faciliter l'orientation du timon dans les courbes de la voie.

Les butées centrales 74 sont avantageusement constituées de plaques en acier graissées présentant elles aussi des bords d'attaque chanfreinés. Ces plaques sont avantageusement montées sur un plateau en élastomère rigide, pour limiter la brutalité des chocs et éviter les vibrations. Elles peuvent être réglables pour permettre de compenser leur usure. Pour réduire le moment des forces qu'elles exercent sur le rail de guidage, les butées 14 sont avantageusement placées en partie basse, c'est-à-dire à proximité de l'encastrement du rail 25.

Les quatre butées 76 d'extrémité peuvent constituer patins de frein, comme cela a été indiqué plus haut. Elles aussi peuvent être portée par des plaques réglables pour compenser l'usure ou être constituées par de telles plaques.

Le courant électrique d'alimentation du moteur peut être amené par les procédés habituels en matière de transport ferroviaire. Dans le cas illustré en figures 4 et 5, le courant est amené par un rail conducteur 93. Chaque boîte 51 est munie d'un ensemble de captage pouvant prendre une position de travail (à gauche sur la figure 4) et une position escamotée lors du passage des aiguillages (à droite sur la figure 4). Chaque ensemble comporte un patin 81 et un galet 82 coopérant avec des cames de la voie pour effacer et ramener le patin 81.

L'essieu peut comporter d'autres éléments destinés à remplir des fonctions supplémentaires. Il peut par exemple comporter une pièce 88 libre en rotation autour de la traverse d'essieu permettant de fixer un frein d'immobilisation, pneumatique ou électromagnétique, à mâchoire destiné à venir pincer la roue 12 sous la traverse de charge 54. La traverse peut alors être reliée à la mâchoire par une bielle de façon à transmettre l'effort de freinage de façon classique. Pour limiter le débattement transversal de la suspension, des butées (non représentées) peuvent être disposées entre la couronne à billes et le mât 53.

Dans le mode de réalisation montré en figure 4, le rail 25 se réduit à deux flancs parallèles encastrés dans des traverses courtes 87 disposées transversalement à la voie et réparties à intervalles réguliers le long de celle-ci. Les flancs peuvent être en acier, recouverts sur la face interne d'une couche de faible épaisseur en matériau conducteur d'électricité. Leur épaisseur peut varier et être plus faible dans les courbes pour faciliter le passage du moteur. Les traverses peuvent au contraire être en matériau amagnétique mais conducteur de l'électricité.

**Revendications**

1. Essieu orientable à roues indépendantes métalliques pour véhicule ferroviaire comportant un timon (14) perpendiculaire à l'axe des roues, caractérisé en ce qu'il comprend également des moyens capteurs (16, 18, 20) de mesure de la position du timon, par rapport à la voie ferroviaire, des moyens (26) de détermination de position de consigne par rapport à la voie, des moyens électromagnétiques (22, 24) portés par le timon et coopérant avec la voie pour exercer sur l'essieu une force d'orientation de ce dernier, et un circuit d'asservissement fournissant aux moyens électromagnétiques un courant tel que ces moyens tendent à annuler l'écart entre position mesurée et position de consigne.

2. Essieu selon la revendication 1, caractérisé en ce qu'il comprend un capteur (20) de mesure de l'entrefer suivant l'axe de roues et un capteur (16, 18) de mesure de l'entrefer à au moins une extrémité du timon (14).

3. Essieu selon la revendication 2, caractérisé en ce que ledit circuit comprend des moyens de mémorisation temporaire des mesures effectuées par le capteur d'extrémité.

4. Essieu selon la revendication 2, caractérisé en ce qu'il comprend deux capteurs (16, 18) placés sur le timon symétriquement par rapport à l'axe de l'essieu.

5. Essieu selon l'une quelconque des revendications précédentes, caractérisé en ce que les capteurs sont disposés pour mesurer l'entrefer de chaque côté d'un rail central de guidage.

6. Essieu selon la revendication 5, caractérisé en ce que le rail central de guidage présente une section en U et en ce que le timon comprend une poutre circulant à l'intérieur du rail et contenant la partie active d'un moteur linéaire de traction et un cadre porteur situé de part et d'autre du rail et portant les capteurs et les moyens électromagnétiques coopérant avec le rail.

7. Essieu selon la revendication 5 ou 6, caractérisé en ce que le timon porte des butées mécaniques limitant les écarts angulaires du timon par rapport à la voie, certaines des butées (74) étant placées au centre du timon et présentant une saillie telle qu'elles permettent, lorsqu'elles viennent en contact avec le rail, un angle de dérive de l'essieu tendant à recentrer ce dernier.

8. Essieu selon la revendication 1, caractérisé en ce que les moyens électromagnétiques comprennent deux jeux d'électro-aimants (22, 24) placés à proximité des extrémités du timon.

9. Essieu selon la revendication 8, caractérisé en ce que les moyens électromagnétiques comprennent un jeu d'électro-aimants supplémentaire placés au milieu du timon et alimentés pour exercer un effort transversal en cas de dépassement d'une valeur prédéterminée d'écart.

10. Essieu selon la revendication 7, caractérisé en ce que les butées comprennent également des butées d'extrémité (76) constituant patins de freinage et en ce que le circuit d'asservissement est commandable de façon à provoquer la venue en contact de ces butées d'extrémité avec le rail.

**Patentansprüche**

1. Schwenkbare Achse von unabhängigen metalischen Rädern für ein Eisenbahnfahrzeug mit einer rechtwinklig zur jeweiligen Radachse angeordneten Deichsel (14), dadurch gekennzeichnet, daß sie auch Empfangsmittel (16, 18, 20) zur Messung der Postition der Deichsel in bezug auf die Eisenbahnschiene, Mittel (26) zur bestimmung der vorgeschriebenen Position in bezug auf die Schiene, electromagnetische Mittel (22, 24), die von der Deichsel getragen werden und mit der Schiene zur Übertragung einer Ausrichtekraft auf die Achse zusammenwirken, und einen Steuerkreis, der den elektromagnetischen Mitteln einen solchen Strom liefert, daß diese Mittel darauf hinwirken, den Fehler zwischen der gemessenen Position und der vorgeschriebenen Position auszugleichen, aufweist.

2. Achse nach Anspruch 1, dadurch gekennzeichnet, daß sie einen Sensor (20) zur Messung des Luftspaltes entsprechend der Radachse und einen Sensor (16, 18) zur Messung des Luftspaltes an wenigstens einem Außenende der Deichsel (14) aufweist.

3. Achse nach Anspruch 2, dadurch gekennzeichnet, daß der Steuerkreis temporäre Speichermittel für durch den Sensor am Außenende bewirkte Messungen aufweist.

4. Achse nach Anspruch 2, dadurch gekennzeichnet, daß sie zwei Sensoren (16, 18), die an der Deichsel symmetrisch in bezug auf die Radachse angeorndet sind, aufweist.

5. Achse nach einem der vorangehenden Ansprüche, dadurch gekennzeichnet, daß die Sensoren zur Messung des Luftspaltes zu jeder Seite einer zentralen Leitschiene angeordnet sind.

6. Achse nach Anspruch 5, dadurch gekennzeichnet, daß die zentrale Leitschiene querschnittlich U-förmig ausgebildet ist und daß die Deichsel einen im Inneren der Leitschiene zirkulierenden Träger aufweist, der den aktiven Teil eines Traktions-Linearmotores enthält und ein Traggestell aufweist, welches zu beiden Seiten der Schiene angeordnet ist und die Sensoren und die elektromagnetischen Mittel trägt, die mit der Schiene zusammenwirken.

7. Achse nach den Ansprüchen 5 oder 6, dadurch gekennzeichnet, daß die Deichsel mechanische Widerlager aufweist, die den Winkelausschlag der Deichsel in bezug auf den Weg einschränken, wobei bestimmte Widerlager (74) im Zentrum der Deichsel angeordnet sind und einen Ansatz bilden, der, während sie in den Kontakt mit der Schiene kommen, die Richtigstellung eines Abweichwinkels der Achse erlauben.

8. Achse nach Anspruch 1, dadurch gekennzeichnet, daß die elektromagnetischen Mittel zwei Sätze von Elektromagneten (22, 24) aufweisen, die in der Nähe der freien Enden der Deichsel angeordnet sind.

9. Achse nach Anspruch 8, dadurch gekennzeichnet, daß die elektromagnetischen Mittel einen Satz zusätzlicher Elektromagneten aufweisen, wobei die Elektromagneten in der Mitte der Deichsel angeordnet und so ausgerüstet sind, daß sie eine transversale Kraft für den Fall ausüben können, daß eine Überschreitung eines vorbestimmten Fehlerwertes erfolgt.

10. Achse nach Anspruch 7, dadurch gekennzeichnet, daß die Widerlager auch äußere Widerlager (76) aufweisen, die Bremsschuhe bilden, und daß der Steuerkreis in der Weise betätigbar ist, daß ein Inkontaktkommen der äußeren Widerlager mit der Schiene hervorgerufen wird.

**Claims**

1. Orientable axle with independent metal wheels for railroad vehicle, comprising a beam (14) perpendicular to the axis of the wheels, characterized in that it further comprises sensor means (16, 18, 20) for measuring the position of the beam with respect to the railroad track, means (26) for determining a set position with respect to the track, electromagnetic means (22, 24) carried by the beam and cooperating with the track for exerting on the axle a force for orientating the latter, and a servo-control circuit delivering a current to the electromagnetic means which is such that the electromagnetic means tend to cancel out the difference between the measured position and the set position.

2. Axle according to claim 1, characterized in that it includes a sensor (20) for measuring the air gap along the axis of the wheels and a sensor (16, 18) for measuring the air gap at at least one end of the beam (14).

3. Axle according to claim 2, characterized in that said circuit includes means for temporarily storing the measurements carried out by the end sensor.

4. Axle acording to claim 2, characterized in that it comprises two sensors (16, 18) placed on the beam symmetrically with respect to the shaft of the axle.

5. Axle according to any one of the preceding claims, characterized in that the sensors are disposed so as to measure the air gap on each side of a central guide rail.

6. Axle according to claim 5, characterized in that the central guide rail has a U-shaped section and in that the beam comprises a girder travelling inside the rail and containing the active part of a linear traction motor, and a carrier frame situated on each side of the rail and carrying the sensors and the electromagnetic means cooperating with the rail.

7. Axle according to claim 5 or 6, characterized in that the beam includes mechanical stops limiting the amounts of angular deflection of the beam with respect to the track, some of the stops (74) being placed in the center of the beam and having an amount of projection such that, when they come into contact with the rail, they allow a deflection angle of the axle tending to recenter the latter.

8. Axle according to claim 1, characterized in that the electromagnetic means include two sets of electromagnets (22, 24) placed in the vicinity of the ends of the beam.

9. Axle according to claim 8, characterized in that the electromagnetic means include an additional set of electromagnets placed in the middle of the beam and fed with power so as to exert a transverse force should a predetermined deviation value be exceeded.

10. Axle according to claim 7, characterized in that the stops further include end stops (76) forming braking shoes and in that the servo-control circuit is controllable so as to cause the end stops to come into contact with the rail.

FIG.1.

FIG.2.

FIG.3A.

1

FIG.3.

FIG.6.

EP 0 285 643 B1

FIG.4.

FIG.5.

3